# EUROPEAN PATENT APPLICATION

(11) **EP 4 205 611 A1**
(43) Date of publication of application: **05.07.2023**
(21) Application number: 22216403.0
(22) Date of filing: 23.12.2022
(51) Int. Cl.: A47J 37/06

(54) **OVERTURNABLE DUAL-PURPOSE MULTIFUNCTIONAL AIR FRYER**

(30) Priority: 02.01.2022 CN 202220000247 U
(71) Applicant: Ningbo Careline Electric Appliance Co., Ltd., Ningbo, Zhejiang 315000 (CN)
(72) Inventor: ZHANG, Yichi, Ningbo, 315000 (CN); LIANG, Jiahe, Ningbo, 315000 (CN); BAI, Rongjie, Ningbo, 315000 (CN); PAN, Huayuan, Ningbo, 315000 (CN)
(74) Representative: Locas, Davide

(57) **Abstract**

The present disclosure provides an overturnable dual-purpose multifunctional air fryer, including a machine core and a fryer, wherein the machine core has a bottom opening which is provided with a thermal circulation fan and a heating element therein, and the fryer has a top opening; and the machine core and the fryer are detachably connected, and the machine core and the fryer can be in: a first matching state, where the machine core is located above the fryer, and the bottom opening of the machine core faces downward and communicates to the top opening of the fryer; and a second matching state, where the fryer is located above the machine core, and the bottom opening of the machine core faces upward and connects to a bottom of the fryer. According to the structural design of the air fryer in the present disclosure, the machine core may be overturned to work so that the air fryer has multiple functions such as deep frying, steaming, boiling, frying, roasting, stewing, stir-frying, etc.; and thus, the requirements of different users can be meet, and the practicability of the air fryer can be greatly increased. In addition, the air fryer, in the present disclosure, has relatively larger cooking space and lower manufacturing costs by removing the elements such as the door panel, the lower shell, etc.

## Description

### Technical Field

The present disclosure relates to the technical field of kitchen household appliances, and particularly relates to an overturnable dual-purpose multifunctional air fryer.

### Background Art

Air fryer, a machine for "deep frying" by using air, mainly uses air to replace the hot oil originally in the frying pan to make the food cooked; at the same time, the hot air also blows away the moisture on the surface of the food, to make the ingredients achieve the effect similar to deep frying. The air fryer works by a principle of "high-speed air circulation technology", in which the heat pipe inside the machine, by heated at high temperature, generates hot air, and then the high-temperature air is blown into the fryer to heat the food by a fan and is circulated in a closed space, so as to use the grease of the food itself to fry the food, such that the food is dehydrated and its surface becomes golden and crispy, thereby achieving the effect of frying.

However, the air fryer in the market has a relatively simple cooking function, which can only bake and fry the food, but not satisfy consumers' choice of food cooking methods. Therefore, the concept of multifunction came along. At present, due to the improvement mainly in the heating mode of the multifunctional air fryer, the fryer possesses multiple functions, such as setting a steam generator inside the air fryer to make the air fryer have the function of steaming box and for example, adding the bottom heating device to make the air fryer have the function of frying and baking. However, this type of multifunctional air fryer has high production cost, small internal space of cooking cavity and limited functions, which cannot achieve the functions of stir-frying, stewing and frying.

### Summary

The present disclosure provides an overturnable dual-purpose multifunctional air fryer, which solve the problem of high cost, small cooking space and limited functions with respect to existing multifunctional air fryers.

In order to solve the above technical problems, the present disclosure provides an overturnable dual-purpose multifunctional air fryer, comprising a machine core and a fryer, wherein the machine core has a bottom opening which is provided with a thermal circulation fan and a heating element therein, and the fryer has a top opening; and the machine core and the fryer are detachably connected, and the machine core and the fryer can be in:
a first matching state, wherein the machine core is located above the fryer, and the bottom opening of the machine core faces downward and communicates with the top opening of the fryer; or
a second matching state, wherein the fryer is located above the machine core, and the bottom opening of the machine core faces upward and connects to a bottom of the fryer.

According to an optional embodiment, the bottom of the fryer is provided with a thermal conductive structure that can enhance the thermal conducting efficiency of the fryer under the second matching state.

According to an optional embodiment, the bottom of the fryer is provided with a first step which is embedded into the bottom opening of the machine core when the machine core and the fryer are in the second matching state. The configuration of the first step not only improves the stability of the fryer when placed and avoids the fryer from dropping or falling down, but also increases the heating efficiency by enabling the bottom of the fryer to further attach the heating element.

According to an optional embodiment, a sectional area of a top of the machine core is less than a sectional area of the top opening of the fryer, so that at least partial machine core is accommodated in the fryer. Consequently, the occupied space of the air fryer can be reduced and the packaging and transportation costs of the air fryer can be greatly reduced.

According to an optional embodiment, the air fryer further includes a lid matched with the top opening of the fryer, and the lid covers the fryer when the machine core and the fryer are in the second matching state. The lid is configured for improving the heating efficiency by shortening the heating time in the second matching state.

According to an optional embodiment, a sectional area of a top of the lid is less than a sectional area of the top opening of the fryer, so that the lid is at least partially accommodated in the fryer. In the embodiment, part or all of the lid is accommodated in the fryer body. On one hand, the occupied space of the air fryer can be reduced, so as to lower the packaging cost and the transportation cost of the air fryer; on the other hand, the lid has a stability when placed, which avoids the lid from falling off.

According to an optional embodiment, a control panel is arranged on the side surface of the machine core, and the control panel is configured to display automatically the corresponding working mode, when the matching state between the machine core and the fryer is switched. As the control panel may automatically display the corresponding working mode, it improves the user's experience by reminding the user to select a corresponding cooking operation to cook.

According to an optional embodiment, the fryer is made of a transparent material or part region of the fryer is made of a transparent material, so that a user can observe the cooking state of the food and facilitate the cooking operation.

According to an optional embodiment, one of the bottom opening of the machine core and the top opening of the fryer is provided with a second step which is embedded into the other of the bottom opening of the machine core and the top opening of the fryer, when the machine core and the fryer are in the first matching state. The second step in the present disclosure is configurated for ensuring the stability when the machine core is matched with the fryer.

According to an optional embodiment, the top of the machine core is provided with an air inlet; the side surface of the machine core is provided with an air outlet; and a cooling fan is sleeved over the motor. By setting the cooling fan, the interior of the machine core can be cooled, so as to avoid the excessively high temperature of the machine core from scalding the users or affecting the use of other element in the machine core.

Compared with the prior art, the beneficial effects of this disclosure described as below.

The machine core and the fryer of the present disclosure have two matching states. In the first matching state, the machine core is located above the fryer, and the bottom opening of the machine core faces downward and communicates with the top opening of the fryer; and in the second matching state, the fryer is located above the machine core, and the bottom opening of the machine core faces upward and connects to a bottom of the fryer. By the structural design of the air fryer in the present disclosure, the air fryer has multiple functions such as deep frying, steaming, boiling, frying, roasting, stewing, stir-frying, etc., which not only meets the needs of different users, but also greatly improves the practicality of the air fryer. The air fryer of the present disclosure, compared with conventional one, has relatively larger cooking space and low manufacturing costs by removing the elements of the fryer such as the door panel, the lower shell, etc.

### Brief Description of Drawings

FIG. 1 is a structural schematic diagram of a machine core and a fryer in a first matching state according to an embodiment of the present disclosure;
FIG. 2 is a sectional view of a machine core and a fryer in a first matching state according to an embodiment of the present disclosure;
FIG. 3 is a structural schematic diagram of a machine core and a fryer in a second matching state according to an embodiment of the present disclosure;
FIG. 4 is a sectional view of a machine core and a fryer in a second matching state according to an embodiment of the present disclosure; and
FIG. 5 is a structural schematic diagram of a machine core, a fryer and a lid in a state of accommodation according to an embodiment of the present disclosure.

Explanation of reference signs:
1, machine core; 2, fryer body; 3, motor; 4, thermal circulation fan; 5, heating element; 6, thermal conductive structure; 7, first step; 8, lid; 9, control panel; 10, cooling fan.

### Detailed Description of Embodiments

In order to make the above objects, features and advantages of the present disclosure more obvious and easier to understand, the present disclosure is further described in detail below in conjunction with the drawings and specific embodiments.

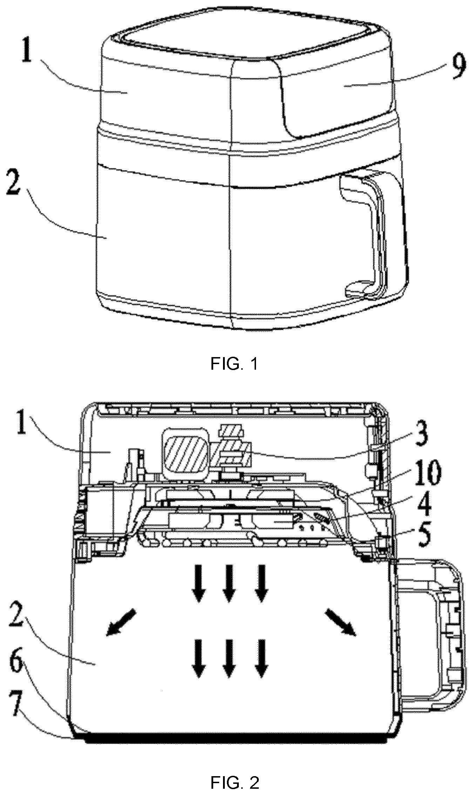

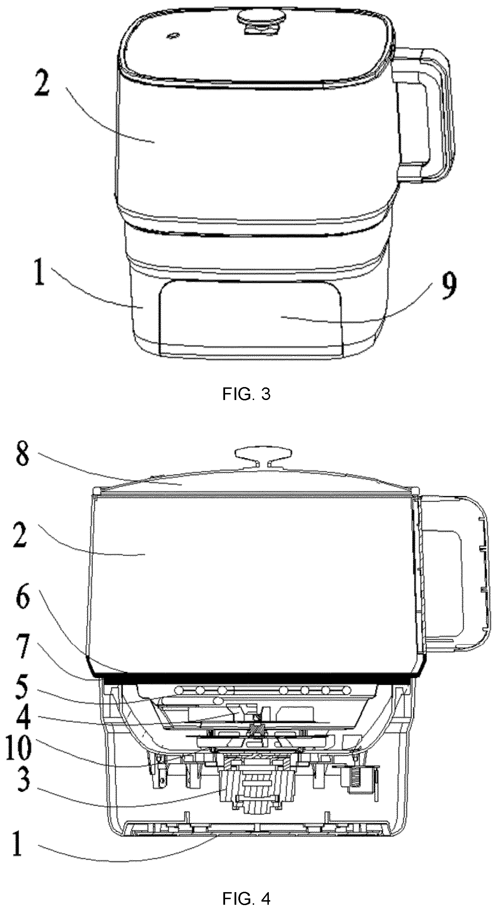

As shown in FIGS. 1 to 4, an overturnable dual-purpose multifunctional air fryer comprises a machine core 1 and a fryer 2, wherein the machine core 1 has a bottom opening which is provided with a thermal circulation fan 4 and a heating element 5 therein, and the fryer 2 has a top opening; and the machine core 1 and the fryer 2 are detachably connected, and the machine core 1 and the fryer 2 can be in a first matching state, where the machine core 1 is located above the fryer 2, and the bottom opening of the machine core 1 faces downward and communicates with the top opening of the fryer 2; and a second matching state, where the fryer 2 is located above the machine core 1, and the bottom opening of the machine core 1 faces upward and connects to a bottom of the fryer 2.

In this embodiment, the heating element 5 may be a heating tube, or a heating plate provided with vent hole. The top of the machine core 1 is horizontally arranged, and a motor 3 is mounted in the machine core 1, wherein a thermal circulation fan 4 is sleeved on the output shaft of the motor 3, and a heating element 5 is arranged below the thermal circulation fan 4. When there is a need of air frying the food, by covering the machine core 1 on the fryer 2, and connecting the motor 3 and the heating element 5 to power supply, the thermal circulation fan 4, driven by the motor 3, blows the hot air generated by the heating element 5 to the inside of the fryer 2, which enables to cook the food inside the fryer 2 in an air fryer mode. When there is a need of steaming and boiling the food, the machine core 1 is rotated by 180 degrees, so as to place the bottom of the fryer 2 above the bottom opening of the machine core 1, and the heating element 5 is connected to the power supply, such that a mode of steaming and boiling is activated for cooking the food in the fryer 2. According to the embodiment, by the structural design for the air fryer 2, the air fryer 2 may be overturned to work so that the air fryer 2 has multiple functions such as deep frying, steaming, boiling, frying, roasting, stewing, stir-frying, etc.; and thus, the requirements of different users can be meet, and the practicability of the air fryer 2 can be greatly increased.

Further, the bottom of the fryer 2 is provided with the thermal conductive structure 6, which is for example a thermal-conductive aluminum plate arranged at the bottom of the fryer 2. The configuration of the thermal conductive structure 6 may improve the thermal conduction efficiency in the mode of steaming and boiling, thereby ensuring the heating efficiency.

Further, the bottom of the fryer 2 is provided with the first step 7 which is embedded into the bottom opening of the machine core 1, when the machine core 1 and the fryer 2 are in the second matching state. According to the embodiment, the configuration of the first step 7 not only improves the stability of the fryer 2 when placed and avoids the fryer 2 from dropping or falling down, but also increases the heating efficiency by enabling the bottom of the fryer 2 to further attach the heating element 5.

Further, the sectional area of the top of the machine core 1 is less than the sectional area of the top of the fryer 2, so that the fryer 2 accommodates to at least partial machine core 1. In the present disclosure, as the sectional area of the top of the machine core 1 is less than the sectional area of the fryer 2, the machine core 1, when placed upside down, may be partially or completely accommodated in the fryer 2. By accommodating the machine core 1 into the fryer 2, not only the occupied space of the air fryer can be reduced, but also the packaging cost and the transportation cost of the air fryer can be greatly lower.

Further, the air fryer 2 further includes a lid 8 matched with the top opening of the fryer 2. When the machine core 1 and the fryer 2 are in the second matching state, the lid 8 covers the fryer 2. In the embodiment, the configuration of the lid 8 may improve the heating efficiency in the mode of steaming and boiling.

Further, the sectional area of a top of the lid 8 is less than the sectional area of the top opening of the fryer 2, so that the lid 8 is at least partially accommodated in the fryer 2. According to the embodiment, part or all of the lid 8 is accommodated in the fryer body 2. On one hand, the occupied space of the air fryer can be reduced, so as to lower the packaging cost and the transportation cost of the air fryer; on the other hand, the stability of the lid 8 can be ensured when placed, which avoids the lid 8 from falling off.

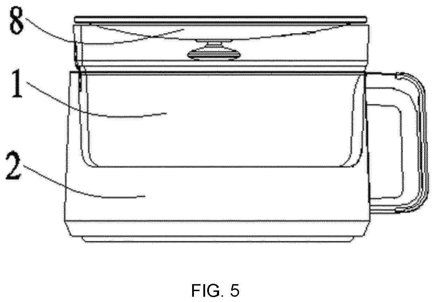

Further, as shown in FIG. 5, the sectional area of the top of the lid 8 is less than the sectional area of the bottom opening of the machine core 1, and the sectional area of the top of the machine core 1 is less than the sectional area at the top opening of the fryer 2, so that after the lid 8 is accommodated in the bottom opening of the machine core 1, the lid 8 and the machine core 1 are jointly accommodated in the fryer 2, which thus decreases the occupied space of the air fryer and lowers the cost of the air fryer during packaging and transportation.

Further, the control panel 9 is arranged on the side surface of the machine core 1, and the control panel 9 is configured to display automatically the corresponding working mode when the matching state between the machine core 1 and the fryer 2 is switched. The machine core 1, for example, is provided therein with a sensor which is electrically connected with the control panel 9. When the sensor senses that the machine core 1 is inverted, the signal is transmitted to the control panel 9, and then the control panel 9 automatically displays the corresponding mode. For example, when the bottom opening of the machine core 1 covers on the top opening of the fryer 2, the control panel 9 displays the air fryer mode; and when the bottom of the fryer is placed on the bottom opening of the machine core 1, the control panel 9 automatically switches to the mode of steaming and boiling. The displaying and switching of the mode can be achieved through the indicator or the display screen, which is not limited further. In the present embodiment, when the matching state between the machine core 1 and the fryer 2 is switched, the control panel 9 automatically displays the corresponding working mode, which may remind the user to select the corresponding cooking operation to cook.

Further, the fryer 2 is made of a transparent material or part region of the fryer 2 is made of a transparent material. In this embodiment, the fryer 2 is a transparent container, or part region of the fryer 2 is a transparent area, so that the cooking of food can be observed, and thus the user can easily control the cooking time for the food, so as to effectively prevent the food from being too hard or overcooked.

Further, a detachable filter screen is arranged below the heating element 5. In the first matching state, the detachable filter screen can effectively prevent the splashed oil droplets in the cooking process from contacting the thermal circulation fan 4 and the heating element 5 above, which will cause the oil pollution, thereby prolonging the service life of the heating element 5 and the thermal circulation fan 4. In the second matching state, the detachable filter screen is configured for preventing the heating element 5 from scalding the user.

Further, one of the bottom opening of the machine core 1 and the top opening of the fryer 2 is provided with a second step which is embedded into the other of the bottom opening of the machine core 1 and the top opening of the fryer 2, when the machine core 1 and the fryer 2 are in the first matching state. Specifically, the edge of the top of the fryer 2 contracts toward the inside of the fryer 2 to form the second step, in which the edge of the bottom of the machine core 1 is embedded. Alternatively, the edge of the bottom of machine core 1 extends outward to form the second step which is embedded in the top edge of the fryer 2. The second step in this embodiment is configured for ensuring the stability when the machine core 1 is fitted to the fryer 2.

Further, the top of the machine core 1 is provided with an air inlet; the side surface of the machine core 1 is provided with an air outlet; and a cooling fan 10 is sleeved over the motor 3. Specifically, a cooling fan 10 is sleeved over the output shaft of the motor 3 and driven by the motor 3 to rotate, which forms a heat dissipation structure with the air inlet at the top of machine core 1 and air outlet at the side surface. In the mode of air fryer 2, the heat inside the fryer 2 can be dissipated from the air outlet and the contact surface at which the machine core 1 and the fryer 2 are matched with each other. In the mode of steaming and boiling, the heat inside the fryer 2 can be dissipated from the air outlet of the lid 8, and the heat inside the machine core 1 can be dissipated from the air outlet. In this embodiment, by setting a cooling fan 10, the heat inside the machine core 1 can be dissipated, which prevents the temperature of the machine core 1 from being too high to scald the user and affect the use of other elements in the machine core 1.

It should be noted that the terminology herein is only used for the purpose of describing specific embodiments, but not to limit the exemplary embodiments according to the present disclosure. As used herein, unless it is clearly dictated in the context, the singular is intended to include the plural. In addition, it should also be understood that when the terms "contain" and/or "include" are used in this specification, they indicate that the features, steps, operations, means, components and/or combinations thereof exist.

The relative arrangements of components and steps, numerical expressions and numerical values set forth in these embodiments do not limit the scope of the present disclosure unless specifically stated otherwise. At the same time, it should be understood that, for the convenience of description, the sizes of the various parts shown in the drawings are not drawn according to the actual proportional relationship. Techniques, methods and devices known to those of ordinary skill in the relevant art may be discussed not in detail, but in appropriate cases, such techniques, methods and devices should be considered part of the patent grant. In all examples shown and discussed herein, any specific values should be construed as exemplary only, but not as limitations. Therefore, other examples of the exemplary embodiment may have different values. It should be noted that similar numerals and letters refer to similar items in the following figures, therefore, once a certain item is defined in one figure, it does not require further discussion in subsequent figures.

In the description of the present disclosure, it should be understood that orientation words such as "front, back, up, down, left, right", "transverse, upright, vertical, horizontal" and "top, bottom" and so on indicate the orientation or positional relationship generally based on the orientation or positional relationship shown in the drawings, and is only for the convenience of describing the present disclosure and simplifying the description. In the absence of a contrary statement, these orientation words do not indicate or imply the referred device or elements must be in a specific orientation or be constructed and operated in a specific orientation, so they cannot be construed as limiting the protection scope of the present disclosure; and the orientation words "inside, outside" refer to the inside and outside relative to the outline of each component itself.

To allow for description, terms relating to space may be used here, such as "on ...", "over ...", "on the upper surface of ...", "above", etc., to describe the spatial location relationship between one device or feature and other devices or features as shown in the drawings. It should be understood that the spatially relative terms are intended to encompass different orientations when using or operating the device besides the orientation depicted in the figures. For example, if the device in the figures is turned over, the device described as "above other devices or configurations" or "over other devices or configurations" would then be oriented as "under other devices or configurations" or "below other devices or configurations". Thus, the exemplary term "above ..." can encompass both orientations of "above ..." and "below ...". The device may be otherwise oriented (rotated by 90 degrees or at other orientations) and the spatially relative descriptions used herein may be interpreted accordingly.

In addition, it should be noted that the use of words such as "first" and "second" to define components is only for the convenience of distinguishing corresponding components. If there is no other statement, the above words have no special meaning, and therefore cannot be interpreted as limiting the protection scope of the present disclosure.

The overturnable dual-purpose multifunctional air fryer provided by the present disclosure has been introduced in detail above. In the present disclosure, specific examples are used to illustrate the principle and embodiment of the present disclosure. The description of the above embodiments only helps understanding the method and its core idea of the present disclosure. At the same time, for those of ordinary skill in the art, based on the idea of the present disclosure, there will be changes in the specific embodiment and scope of application. In summary, the content of this specification should not be understood as limitation of the present disclosure.

## Claims

1. An overturnable dual-purpose multifunctional air fryer, comprising a machine core (1) and a fryer (2), **characterized in that** the machine core (1) has a bottom opening which is provided with a thermal circulation fan (4) and a heating element (5) therein, and the fryer (2) has a top opening; and the machine core (1) and the fryer (2) are detachably connected, and the machine core (1) and the fryer (2) can be in
a first matching state, wherein the machine core (1) is located above the fryer (2), and the bottom opening of the machine core (1) faces downward and communicates with the top opening of the fryer (2); or
a second matching state, wherein the fryer (2) is located above the machine core (1), and the bottom opening of the machine core (1) faces upward and connects to a bottom of the fryer (2).

2. The overturnable dual-purpose multifunctional air fryer according to claim 1, wherein the bottom of the fryer (2) is provided with a thermal conductive structure (6).

3. The overturnable dual-purpose multifunctional air fryer according to claim 1 or 2, wherein the bottom of the fryer (2) is provided with a first step (7) which is embedded into the bottom opening of the machine core (1) when the machine core (1) and the fryer (2) are in the second matching state.

4. The overturnable dual-purpose multifunctional air fryer according to any one of claims 1 to 3, wherein a sectional area of a top of the machine core (1) is less than a sectional area of the top opening of the fryer (2), such that the machine core (1) is at least partially accommodated in the fryer (2).

5. The overturnable dual-purpose multifunctional air fryer according to any one of claims 1 to 4, wherein the air fryer further comprises a lid (8) matched with the top opening of the fryer (2), and the lid (8) covers the fryer (2) when the machine core (1) and the fryer (2) are in the second matching state.

6. The overturnable dual-purpose multifunctional air fryer according to claim 5, wherein a sectional area of a top of the lid (8) is less than a sectional area of the top opening of the fryer (2), so that the lid (8) is at least partially accommodated in the fryer (2).

7. The overturnable dual-purpose multifunctional air fryer according to any one of claims 1 to 6, wherein a control panel (9) is arranged on a side surface of the machine core (1), and the control panel (9) is configured to display automatically a corresponding working mode when a matching state between the machine core (1) and the fryer (2) is switched.

8. The overturnable dual-purpose multifunctional air fryer according to any one of claims 1 to 7, wherein the fryer (2) is made of a transparent material or part region of the fryer (2) is made of a transparent material.

9. The overturnable dual-purpose multifunctional air fryer according to any one of claims 1 to 8, wherein one of the bottom opening of the machine core (1) and the top opening of the fryer (2) is provided with a second step which is embedded into the other of the bottom opening of the machine core (1) and the top opening of the fryer (2), when the machine core (1) and the fryer (2) are in the first matching state.

10. The overturnable dual-purpose multifunctional air fryer according to any one of claims 1 to 9, wherein a top of the machine core (1) is provided with an air inlet; a side surface of the machine core (1) is provided with an air outlet; and a cooling fan (10) is sleeved over a motor (3).
